Europäisches Patentamt

European Patent Office

Office européen des brevets

(19)

(11) Veröffentlichungsnummer: **0 008 065**
B1

(12) # EUROPÄISCHE PATENTSCHRIFT

(45) Veröffentlichungstag der Patentschrift:
23.03.83

(21) Anmeldenummer: 79102728.7

(22) Anmeldetag: 31.07.79

(51) Int. Cl.³: **H 04 Q 11/04**, H 04 Q 3/54

(54) Indirekt gesteuerte, mit Zeitkanalkopplern ausgerüstete Fernmeldevermittlungsanlage, insbesondere Fernsprechvermittlungsanlage.

(30) Priorität: 09.08.78 DE 2834916

(43) Veröffentlichungstag der Anmeldung:
20.02.80 Patentblatt 80/4

(45) Bekanntmachung des Hinweises auf die Patenterteilung:
23.03.83 Patentblatt 83/12

(84) Benannte Vertragsstaaten:
AT CH DE FR GB IT NL SE

(56) Entgegenhaltungen:
DE-A-2 517 525
DE-A-2 526 115
DE-A-2 748 580
FR-A-2 298 915
FR-A-2 335 896
LU-A-67 356
US-A-4 127 742
MICROCOMPUTER ARCHITECTURES, Third EUROMICRO Symposium on microprocessing and microprogramming, Oktober 3—6, 1977 AMSTERDAM NL BROFFERIO et al.: »Electronic Telephone Switching System: A distributed Control Approach« Seiten 138—142

(73) Patentinhaber: SIEMENS AKTIENGESELLSCHAFT, Berlin und München Wittelsbacherplatz 2, D-8000 München 2 (DE)

(72) Erfinder: Paulmichl, Erich, Dr. Dipl.-Ing., Am Würmufer 9, D-8035 Gauting (DE)

INTERNATIONAL SWITCHING SYMPOSIUM Oktober 25—29, 1976 KYOTO JP SKAPERDA »Generic digital switching System«, Seiten 223—4—1 — 233—4—8
EUROCON '77—CONFERENCE PROCEEDINGS ON COMMUNICATIONS, Mai 3—7, 1977 VENEZIA IT LORENZINI et al.: »Dedicated microcomputers as signalling preprocessorsin Proteo Tandem Exchange«, Seiten 3.5.3.1 — 3.5.3.6
1978 INTERNATIONAL ZÜRICH SEMINAR ON DIGITAL COMMUNICATIONS, 7—9 März 1978 ZÜRICH CH BARTH et al.: »A Digital PABX System with improved flexibility«, Seiten B5-1 — B5.6
TELCOM REPORT, Band 2, Heft 3, März 1979 BERLIN DE SUCKFULL: »Architektur einer neuen Linie digitaler öffentlicher Fernsprechvermittlungen«, Seiten 174—183

## Indirekt gesteuerte, mit Zeitkanalkopplern ausgerüstete Fernmeldevermittlungsanlage, insbesondere Fernsprechvermittlungsanlage

Es ist üblich, in Vermittlungsanlagen verschiedene Einrichtungen nacheinander auf anstehende Informationen nach dem sogenannten Abfrageprinzip abzufragen (siehe P. Gerke: »Rechnergesteuerte Vermittlungsanlagen«, 1972, Seiten 116 bis 121). Hierbei werden vor allem Änderungen des Betriebszustandes von dezentralen Einrichtungen für ihre Auswertung erfaßt. Zu derartigen dezentralen Einrichtungen gehören Teilnehmerschaltungen, Wahlsätze und Verbindungssätze, die unter Verwendung eines Steuerwerks regelmäßig in vorgegebenen Zeitabständen abgefragt werden. Die Abfrageinformationen werden dann mit früheren Abfrageinformationen, die von derselben Einrichtung stammen, zur Auswertung verglichen. Abhängig von den Vergleichsergebnissen werden dann Betriebsvorgänge in der Vermittlungsanlage abgewickelt (siehe auch DE-OS 1 437 576, 2 317 400; DE-PS 1 213 008). Bei solchen Vermittlungsanlagen wird das Abfragen der Einrichtungen direkt mit der Auswertung der erhaltenen Abfrageinformationen verbunden, es wird also jeweils zwischen dem Abfragen zweier verschiedener Einrichtungen der Vergleich aufeinanderfolgender Abfrageinformationen derselben Einrichtung vorgenommen und daraufhin beispielsweise fallweise die Adresse einer Einrichtung abgespeichert, bei der sich der Betriebszustand geändert hat, was sich aufgrund veränderter Abfrageinformationen ergeben hat (siehe DE-PS 1 213 008). Es ist auch bekannt, gegebenenfalls das Abfragen zu unterbrechen, um jeweils die erforderlichen Betriebsvorgänge abzuwickeln, die sich auf die Änderung des Betriebszustandes der abgefragten Einrichtung, beispielsweise einer Teilnehmerschaltung, anzuschließen haben (siehe DE-OS 1 437 576, Seite 74).

In jedem Fall empfiehlt es sich, eine weitere Verarbeitung aufgrund von Abfrageinformationen im Steuerwerk nur dann durchzuführen, wenn es sich um veränderte Informationen handelt. Hierzu kann eine Schaltungsanordnung verwendet werden, mit deren Hilfe regelmäßig in bestimmten Zeitabständen die betreffenden Einrichtungen abgefragt werden, aufeinanderfolgende Informationen, die von derselben Einrichtung stammen, miteinander verglichen werden und dann bei Vorliegen von Änderungen Meldungen an ein Steuerwerk geliefert werden (siehe DE-OS 2 317 400).

Die Erfindung betrifft nun eine indirekt gesteuerte, mit Zeitkanalkopplern ausgerüstete Fernmeldevermittlungsanlage, insbesondere Fernsprechvermittlungsanlage, mit einem Steuerwerk, für das von mehreren anderen Schalteinrichtungen stammende Informationen regelmäßig in bestimmten Zeitabständen für ihre weitere Verarbeitung aufgenommen werden, wozu die Informationen zunächst in einem Pufferspeicherplätze in Zuordnung zu den Schalteinrichtungen aufweisenden Pufferspeicher gespeichert und aufeinanderfolgende Informationen, die von derselben Schalteinrichtung stammen, miteinander verglichen werden, bevor aufgrund von Informationsänderungen Informationen vom Steuerwerk weiter verarbeitet werden.

Eine ähnliche Fernmeldevermittlungsanlage ist in der deutschen Auslegeschrift 2 602 561 beschrieben. Hierin ist lediglich nicht angegeben, daß Zeitkanalkoppler vorgesehen sind. Der Erfindung liegt die Aufgabe zugrunde, eine Schaltungsanordnung anzugeben, welche ermöglicht, ein Steuerwerk durch Verarbeitungsvorgänge aufgrund von Informationen, die von mehreren Schalteinrichtungen stammen, möglichst wenig in Anspruch zu nehmen. Diese möglichst geringe Inanspruchnahme betrifft in der Hauptsache die zeitliche Dringlichkeit, die sich hinsichtlich der weiteren Verarbeitung von Informationen durch dieses Steuerwerk auf dasselbe richtet. Ferner soll durch die Erfindung angegeben werden, wie in den angegebenen Zusammenhängen zu benutzende Speicher in zweckmäßiger Weise aufgebaut und betrieben werden müssen. Der Schwerpunkt der erfindungsgemäßen Aufgabe liegt darin, das Steuerwerk hinsichtlich der Dringlichkeit anfallender Informationsverarbeitungsvorgänge so weit wie möglich zu entlasten.

Die Erfindung löst die gestellte Aufgabe dadurch, daß von den in zeitlich verschachtelten und den Schalteinrichtungen individuell zugeordneten Zeitkanälen anstehenden Informationen jeweils eine von einem Register aufgenommen und dann einem Vergleicher zugeführt wird, daß hierbei von einem der jeweils betreffenden Schalteinrichtung individuell zugeordneten Speicherplatz des Pufferspeichers die früher dort gespeicherte entsprechende Information abgelesen wird und ebenfalls dem Vergleicher zugeführt wird, daß bei Ungleichheit dieser beiden Informationen der Vergleicher die Einspeicherung der im Register enthaltenen Information sowohl in den jeweils abgelesenen Speicherplatz des Pufferspeichers als auch in einen Speicherplatz eines FiFo-Speichers bewirkt, daß an diesem Speicherplatz des FiFo-Speichers auch die Adresse des gerade benutzten Speicherplatzes des Pufferspeichers eingespeichert wird, daß im FiFo-Speicher enthaltene Informationen samt Adressen vom Leitwerk des Steuerwerks entsprechend seinem Arbeitsrhythmus zur Weiterverarbeitung abgeholt und einem Arbeitsspeicher des Steuerwerks eingegeben werden und daß hierbei die Adressen von Speicherplätzen des Pufferspeichers mit Hilfe eines Umsetzers in Adressen von bei dieser Eingabe zu benutzenden Speicherplätzen des Arbeitsspeichers umgesetzt werden.

Dadurch, daß die betreffenden Informationen vom Leitwerk, statt dorthin gemeldet zu werden, entsprechend seinem Arbeitsrhythmus zur Weiterverarbeitung abgeholt werden, ergibt sich zwangsläufig, daß Störungen seines Betriebes durch zu schnell hintereinander eintreffende Informationen vermieden werden. Solche Informationen werden mit Hilfe der verschiedenen Speicher von der Weiterverarbeitung abgehalten. Dabei werden insbesondere belanglose Informationen abgehalten, nämlich solche, die sich von vorhergehenden zugehörenden Informationen nicht unterscheiden. Bei dem verwendeten FiFo-Speicher werden jeweils zuerst aufgenommene Informationen auch wieder zuerst abgegeben, beispielsweise dadurch, daß dieser Speicher wie ein Schieberegister arbeitet. Dadurch können auch Eingabevorgänge in diesen Speicher von Ausgabevorgängen aus diesen Speichern getrennt abgewickelt werden. Das Abholen von dort enthaltenen Informationen wird daher dort nicht zwangsläufig durch das Einspeichern von Informationen blockiert, so daß das Leitwerk ungestört entsprechend seinem Arbeitsrhythmus tätig werden kann. Dies schließt aber nicht aus, daß das Abholen von Informationen während Einspeicherungspausen abgewickelt wird. Da gemäß den erfindungsgemäßen Maßnahmen Verzögerungen bei der Weitergabe von aufgenommenen Informationen vermeidbar sind, können vorteilhafterweise auch solche Informationen erfaßt werden, die unter Zeitzwang weiter zu verarbeiten sind. Dazu gehören beispielsweise von Teilnehmeranschlußschaltungen und Verbindungsleitungsanschlußschaltungen gelieferte Informationen, die den Betriebszustand von Teilnehmerstellen und ähnlichen Einrichtungen betreffen oder die Wahlinformationen sind.

Das Steuerwerk kann also über Zeichenkanäle auch mit solchen Einrichtungen verbunden sein. Es kann auch über einen Zeitkanal, der über einen Zeitkanalkoppler führt, mit einem anderen Steuerwerk verbunden sein, über den der Informationsaustausch zwischen diesen Steuerwerken zu führen ist. Diese Informationen werden dann zweckmäßigerweise zur Erhöhung der Übertragungssicherheit jeweils mehrfach wiederholt. Es kann dann gemäß den erfindungsgemäßen Maßnahmen auch bei der Erfassung dieser Informationen die Anzahl der vom betreffenden Steuerwerk zu verarbeitenden Informationen verringert werden. Beim Abfragen von Teilnehmerstellen erhaltene Informationen wiederholen sich sowieso in der Regel mehrfach.

Beispiele für die erfindungsgemäßen Maßnahmen bei einer Vermittlungsanlage und für die Arbeitsweise der betroffenen Teileinrichtungen werden im folgenden anhand der Figuren näher erläutert.

Fig. 1 zeigt die Gliederung einer in Frage kommenden Fernsprechvermittlungsanlage mit Zeitkanalkopplern;

Fig. 2 zeigt eine Schaltungsanordnung mit den zur Zwischenspeicherung und Gewinnung von weiter zu verarbeitenden Informationen erforderlichen Speichern und sonstigen Einrichtungen.

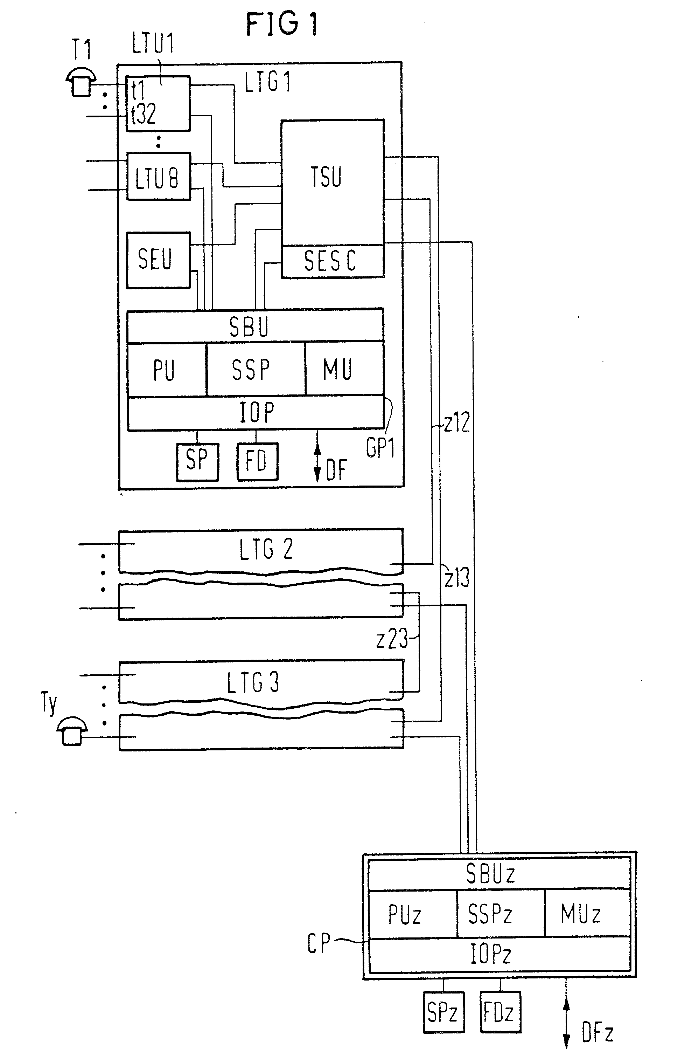

Zu der in Fig. 1 gezeigten Vermittlungsanlage gehören die Anlagenteile LTG1, LTG2 und LTG3, an die einerseits die Teilnehmerstellen T1 ... Ty und andererseits über Steuerleitungen das zentrale Steuerwerk CP angeschlossen sind. Die verschiedenen Anlagenteile sind noch untereinander über die Zwischenleitungen z12, z13 und z23 verbunden. Jeder Anlagenteil hat ein eigenes dezentrales Steuerwerk. So hat der Anlagenteil LTG1 das dezentrale Steuerwerk GP1. Zu diesem Anlagenteil gehört ferner der Zeitkanalkoppler TSU, der mit der Kopplersteuerung SESC ausgerüstet ist. Die Kopplersteuerung SESC bekommt Einstellbefehle vom dezentralen Steuerwerk GP1. Die Teilnehmerstelle T1 ist bei dem Anlagenteil LTG1 über die Teilnehmeranschlußschaltung t1 und über weitere Schaltungen an den Zeitkanalkoppler TSU angeschlossen. Die Teilnehmeranschlußschaltungen sind hier zu Mehrfachanschlußschaltungen gruppenweise zusammengefaßt. So sind die Teilnehmeranschlußschaltungen t1 ... t32 zur Mehrfachanschlußschaltung LTU1 zusammengefaßt. Es sind bei dem Anlagenteil LTG1 mehrere Mehrfachanschlußschaltungen vorgesehen, zu denen auch noch die Mehrfachanschlußschaltung LTU8 gehört. Es können auch entsprechende Mehrfachanschlußschaltungen vorgesehen sein, bei denen mehrere Verbindungsleitungsanschlußschaltungen zusammengefaßt sind, an die Verbindungsleitungen angeschlossen sind, die beispielsweise zu anderen Vermittlungsanlagen führen. An den Zeitkanalkoppler TSU ist ferner die Signalschaltung SEU angeschlossen, in der Tongenerator, Rufgenerator, Codesender- und -empfänger zusammengefaßt sind. Diese Signalschaltung kann demgemäß die verschiedenen Hörtöne sowie Rufzeichen und sonstige benötigte Codezeichen liefern. Außerdem kann sie solche Zeichen auch für ihre Auswertung empfangen. Die Teilnehmeranschlußschaltungen t1 ... t32 und die weiteren sowie die Signalschaltung SEU sind an das Steuerwerk GP1 und an den Zeitkanalkoppler TSU angeschlossen. Diese Einrichtungen können daher über den Zeitkanalkoppler TSU fallweise miteinander verbunden werden.

Außerdem können diese Einrichtungen auch Steuerinformationen mit dem Steuerwerk GP1 austauschen, und zwar über den zugehörigen Informationspuffer SBU, mit dessen Hilfe ein störender Zeitzwang dabei vermieden wird. Zu diesem Steuerwerk gehört noch das Leitwerk SSP, das Verarbeitungswerk PU, der Arbeitsspeicher MU und die Ein-Ausgabesteuerung IOP, an die noch der Hintergrundspeicher FD und das Bediengerät SP angeschlossen sind. Dort ist noch der Datenfernübertragungsanschluß DF vorgesehen, über den gegebenenfalls mit anderen Vermittlungen Steuerdaten ausgetauscht werden können. Die in der Fig. 1 gezeigten Anlagenteile LTG1, LTG2 und LTG3 sind in allen Kombinationen über die Zwischenleitung z12, z13 und z23 verbunden, über die Zeitkanäle geführt sind. Außerdem sind die zugehörigen dezentralen Steuerwerke, wie das Steuerwerk GP1, mit dem entsprechend aufgebauten zentralen Steuerwerk CP verbunden.

Dieses zentrale Steuerwerk wirkt beim Aufbau und Abbau von Verbindungswegen mit, die über mindestens zwei der Anlagenteile LTG1, LTG2 und LTG3 führen. Dabei veranlaßt das zentrale Steuerwerk CP außerdem, daß die anderen Steuerwerke für den Aufbau und Abbau von Verbindungswegen sinngemäß in Anspruch genommen werden, wozu zwischen diesen Steuerwerken Steuerinformationen ausgetauscht werden. Zum zentralen Steuerwerk CP gehören der Informationspuffer SBUz, das Leitwerk SSPz, das Bearbeitungswerk PUz, der Speicher MUz und die Ein-Ausgabesteuerung IOPz, an die der Hintergrundspeicher FDz und das Bedienungsgerät SPz angeschlossen sind. Außerdem ist dort noch der Datenfernübertragungsanschluß DF7 vorgesehen. Die dezentralen Steuerwerke, wie das Steuerwerk GP1, wickeln in jedem Fall solche Vermittlungsfunktionen ab, die für jede Verbindungsanforderung anfallen und die unter Zeitzwang stehen. Dazu gehören das Abfragen von Teilnehmerschaltungen, die Verarbeitung von Vermittlungsinformationen, die insbesondere von Teilnehmerschaltungen oder über Verbindungsleitungen geliefert werden, die Gebührenerfassung, wobei z. B. Gebührenimpulse gezählt werden, und die Lieferung von Einstellbefehlen für die Kopplersteuerung. Das zentrale Steuerwerk CP wickelt dagegen Vermittlungsfunktionen ab, die den Zusammenhang der Teileinrichtungen der Anlage und deren Zusammenhang mit anderen Anlagen berücksichtigen müssen. Dazu gehören die Bewertung von gewählten Ziffern von Rufnummern, die Suche von zu benutzenden Koppelfeldausgängen, die Suche und Auswahl von Verbindungswegen und die Leitweglenkung.

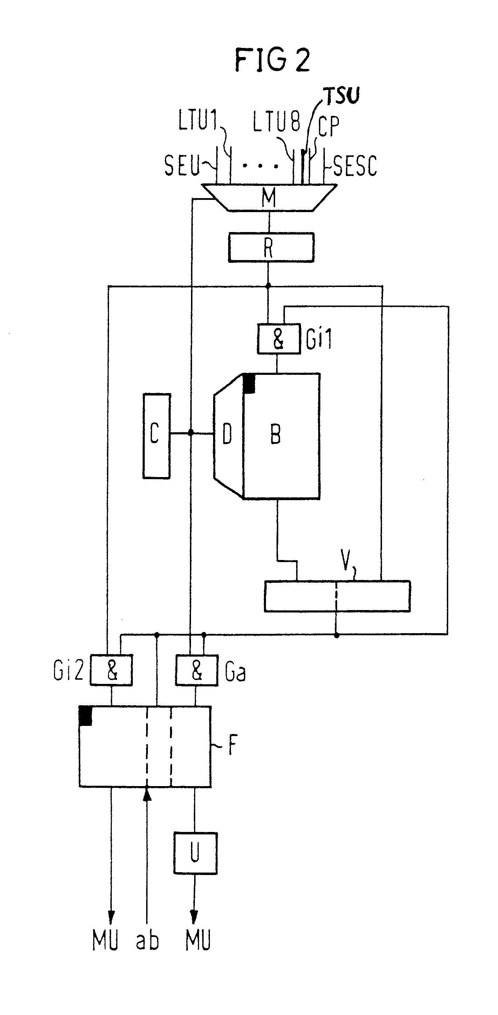

In der Fig. 2 sind die Schaltungsteile des Informationspuffers SBU gezeigt, die zur Aufnahme von Informationen dienen, die von den Schalteinrichtungen LTU1 ... LTU8, SEU, SESC, TSU und CP stammen. Diese Informationen können über einzelne Leitungen, welche Zeitkanäle aufweisen, können aber auch über Sammelleitungen mit jeweils mehreren Zeitkanälen übertragen werden. Zwischen die erwähnten Einrichtungen und das Register R ist der Multiplexer M zwischengeschaltet, der die Informationen Zeitkanälen entsprechend nacheinander zum Register R weitergibt. Der Multiplexer M setzt also in an sich bekannter Weise im Zeitmultiplexverfahren auf einer größeren Anzahl von Kanälen ankommende Informationen auf eine geringere Anzahl von Kanälen um, hier auf einen einzigen Zeitkanal, der zum Register R führt. Hierbei ermöglicht der Multiplexer auch das zyklische Erfassen von Informationen und den erwähnten Einrichtungen. Es ist dies in der Fig. 2 dadurch angedeutet, daß dort zum Multiplexer M mehrere Linien führen, die mit den Hinweiszeichen dieser Einrichtungen versehen sind, also mit den Hinweiszeichen LTU1 ... LTU8, SEU, SESC, TSU und CP. Die jeweils anstehenden Informationen können byteweise gegliedert sein und werden dann auch byteweise vom Multiplexer M zum Register R weitergegeben. Dabei kann das Register die Informationen byteweise seriell aufnehmen und byteweise parallel zu jeweils einem Speicherplatz des an ihn angeschlossenen Pufferspeichers B weitergeben. Das Register R dient dann zugleich zur Serien-Parallel-Umsetzung von Informationen.

Es ist hier nun noch der Adressenzähler C vorgesehen, der mit dem Pufferspeicher B und mit dem Multiplexer M verbunden ist und der die Speicherplätze des Pufferspeichers zyklisch wiederholt zur Einspeicherung von Informationen ansteuert und außerdem den Multiplexer zur Lieferung von Informationen veranlaßt, die in den den aufgerufenen Speicherplätzen des Pufferspeichers B entsprechenden Zeitkanälen anstehen. Der Adressenzähler liefert also die Adressen der Speicherplätze des Pufferspeichers B, die für die Ansteuerung noch durch den Decoder D decodiert werden. Außerdem steuert er hier das dem Aufrufen von Speicherplätzen entsprechende zeitgerechte Erfassen der über die verschiedenen Zeitkanäle übertragenen Informationen. Dadurch ist sichergestellt, daß die Informationen richtig im Zyklus zu den Speicherplätzen des Pufferspeichers B kommen können, die den verschiedenen Zeitkanälen entsprechen. In den Speicherplätzen vorher enthaltene Informationen werden dabei ersetzt. Jedoch wird nicht jede vom Register R zunächst aufgenommene Information zu einem Speicherplatz des Pufferspeichers B weitergegeben. Hierbei hat der Vergleicher V mitzuwirken, der an den Pufferspeicher B und an das Register R angeschlossen ist. Bei Ansteuerung eines Speicherplatzes des Pufferspeichers B durch den Adressenzähler C wird die dort bereits enthaltene Information und außerdem die jeweils im Register R enthaltene Information dem Vergleicher V zum Vergleich zugeführt. Nur bei Ungleichheit dieser Informationen liefert der Vergleicher V eine Steuerinformation, die zu den UND-Gliedern Gi1 und Gi2 gelangt. Diese UND-Glieder sind in die vom Register R zum Pufferspeicher B und zum FiFo-Speicher F führenden Leitungen eingefügt. Vom Register R kann daher eine Information nur dann zu diesen beiden Speichern gelangen, wenn der Vergleicher V eine Steuerinformation liefert. Die UND-Glieder Gi1 und Gi2 sind hier derart ausgebildet, daß sie jeweils eine ein Byte umfassende Information weitergeben können.

Es ist hier auch der Adressenzähler C an den FiFo-Speicher F angeschlossen, und zwar ebenfalls über ein UND-Glied. Dieses UND-Glied Ga ist auch an den Vergleicher V angeschlossen. Wenn daher in den FiFo-Speicher eine Information eingespeichert wird, so wird dorthin zugleich auch die Adresse des gerade angesteuerten Speicherplatzes des Pufferspeichers B geliefert und eingespeichert. Die im FiFo-Speicher enthaltenen Informationen sind hier also auch durch eine Angabe über ihre Quelle ergänzt.

Der FiFo-Speicher ist als Schieberegister ausgebildet. Die in ihm enthaltenen Informationen werden dementsprechend byteweise vom Eingang, an den das Register R und der Adressenzähler C angeschlossen sind, zum Ausgang verschoben, über den dann die Informationen byteweise zum Arbeitsspeicher MU direkt bzw. über den Umsetzer U dorthin weitergegeben werden. Die Weitergabe zum Arbeitsspeicher MU ist in der Fig. 2 durch dementsprechend bezeichnete Pfeile angedeutet. Zum FiFo-Speicher F führt auch ein Pfeil, der mit ab bezeichnet ist. Mit diesem Pfeil wird angedeutet, daß vom Ausgang dieses Speichers Informationen vom Leitwerk SSP des Steuerwerks GP1 entsprechend seinem Arbeitsrhythmus abgeholt werden. Durch eine Taktsteuerung kann beispielsweise in an sich bekannter Weise zustandegebracht werden, daß das Eingeben von Informationen, das Abholen von Informationen und das Verschieben von Informationen innerhalb dieses Speichers abgewickelt wird, ohne daß dabei gegenseitige Störungen auftreten. Die Anzahl der Speicherplätze des FiFo-Speichers F ist unter Berücksichtigung des Vermittlungsverkehrs zu bemessen. Sie kann jedoch kleiner als die Anzahl der Speicherplätze des Pufferspeichers B sein, denn es ist nicht damit zu rechnen, daß jede vom Register R aufgenommene Information anders als die zugehörige vorher aufgenommene Information ist. Es werden ja beispielsweise Teilnehmeranschlußschaltungen wesentlich öfters abgefragt als dort veränderte Informationen geliefert werden. Wie bereits angegeben, werden auch unter anderem die vom zentralen Steuerwerk CP gelieferten Informationen unverändert mehrmals wiederholt. Der Aufwand für den FiFo-Speicher kann daher in engen Grenzen gehalten werden.

Die die Ungleichheit von verglichenen Informationen angebende Steuerinformation kann zusätzlich auch im FiFo-Speicher F gespeichert werden. Hierzu ist der Eingang dieses Speichers auch mit dem Vergleicher V verbunden. Diese Steuerinformation kann als redundante Information zur Überprüfung der richtigen Arbeitsweise des Informationspuffers ausgenutzt werden. Sie wird ebenso wie eine gespeicherte Information samt zugehöriger Adresse gelöscht, wenn über den Ausgang des FiFo-Speichers F Informationen zum Arbeitsspeicher MU bzw. zum Umsetzer U weitergegeben werden.

Mit Hilfe der erfindungsgemäßen Maßnahmen werden vorteilhafterweise durch das Steuerwerk GP1 alle dort benötigten Informationen in gleicher Weise über die in der Fig. 2 dargestellten Einrichtungen erfaßt. Der Umsetzer U liefert dabei auch sofort die Speicherplatzadressen der zur Speicherung dieser Informationen zu benutzenden Speicherplätze des Arbeitsspeichers MU des Steuerwerks GP1. Der Umsetzer U gibt also die Möglichkeit, anstelle der den Speicherplätzen des Pufferspeichers B zugeordneten Speicherplatzadressen, die den verschiedenen Zeitkanälen der Schalteinrichtungen SEU bis SESC (Fig. 2) entsprechen (wobei die diesbezügliche Speicherplatzorganisation dem Ordnungsschema dieser Schalteinrichtungen und somit Aufeinanderfolge der Zeitlagen dieser Zeitkanäle entsprechen mag), Speicherplatzadressen zur Einspeicherung der Informationen im Arbeitsspeicher MU zu verwenden, die den in Zusammenhang mit diesem abzuwickelnden Verarbeitungsvorgängen adäquat sind. Mit Hilfe der erfindungsgemäßen Maßnahmen werden die von den Anschlußschaltungen, vom zugehörigen Zeitkanalkoppler und dessen Kopplersteuerung, von der Signalschaltung und von dem zentralen Steuerwerk benötigten Informationen erfaßt. Informationen, die über den Informationspuffer SBU an solche Einrichtungen zu liefern sind, können dorthin in ähnlicher Weise über hier nicht gezeigte Schaltungsteile des Informationspuffers SBU geschickt werden.

## Patentansprüche

1. Indirekt gesteuerte, mit Zeitkanalkopplern ausgerüstete Fernmeldevermittlungsanlage, insbesondere Fernsprechvermittlungsanlage, mit einem Steuerwerk (GP1), für das von mehreren anderen Schalteinrichtungen (LTU1 ... LTU8, CP, SESC, TSU, SEU) stammende Informationen regelmäßig in bestimmten Zeitabständen für ihre weitere Verarbeitung aufgenommen werden, wozu die Informationen zunächst in einem Pufferspeicherplätze in Zuordnung zu den Schalteinrichtungen (LTU1 ... LTU8, CP, SESC, TSU, SEU) aufweisenden Pufferspeicher (B) gespeichert und aufeinanderfolgende Informationen, die von derselben Schalteinrichtung (LTU1 ... LTU8, CP, SESC, TSU, SEU) stammen, miteinander verglichen werden, bevor aufgrund von Informationsänderungen Informationen vom Steuerwerk (GP1) weiter verarbeitet werden, dadurch gekennzeichnet, daß von den in zeitlich verschachtelten und den Schalteinrichtungen (LTU1 ... LTU8, CP, SESC, TSU, SEU) individuell zugeordneten Zeitkanälen anstehenden Informationen jeweils eine von einem Register (R) aufgenommen und dann einem Vergleicher (V) zugeführt wird, daß hierbei von einem der jeweils betreffenden Schalteinrichtung (LTU1 ... LTU8, CP, SESC, TSU, SEU) individuell zugeordneten Speicherplatz des Pufferspeichers (B) die früher dort gespeicherte entsprechende Information abgelesen wird und ebenfalls dem Vergleicher (V) zugeführt wird, daß bei Ungleichheit dieser beiden Informationen der Vergleicher (V) die Einspeicherung der im Register (R) enthaltenen Informationen sowohl in den jeweils abgelesenen Speicherplatz des Pufferspeichers (B) als auch in einen Speicherplatz eines FiFo-Speichers (F) bewirkt, daß an diesem Speicherplatz des FiFo-Speichers (F) auch die Adresse des gerade benutzten Speicherplatzes des Pufferspeichers (B) eingespeichert wird, daß im FiFo-Speicher (F) enthaltene Informationen samt Adressen vom Leitwerk (SSP) des Steuerwerks (GP1) entspre-chend seinem Arbeitsrhythmus zur Weiterverar-beitung abgeholt und einem Arbeitsspeicher (MU) des Steuerwerks (GP1) eingegeben werden, und daß hierbei die Adressen von Speicherplätzen des Pufferspeichers (B) mit Hilfe eines Umsetzers (U) in Adressen von bei dieser Eingabe zu benutzenden Speicherplätzen des Arbeitsspeichers (MU) umgesetzt werden.

2. Fernmeldevermittlungsanlage nach Anspruch 1, dadurch gekennzeichnet, daß zwischen die Schalteinrichtungen (LTU1 ... LTU8, CP, SESC, TSU, SEU) und das Register (R) ein Multiplexer (M) zwischengeschaltet ist, der die Informationen Zeitkanälen entsprechend nacheinander zum Register (R) weitergibt.

3. Fernmeldevermittlungsanlage nach Anspruch 2, dadurch gekennzeichnet, daß das Register (R) die Informationen byteweise seriell aufnimmt und byteweise parallel zu jeweils einem Speicherplatz des Pufferspeichers (B) weitergibt.

4. Fernmeldevermittlungsanlage nach Anspruch 2 oder 3, dadurch gekennzeichnet, daß ein Adressenzähler (C) vorgesehen ist, der mit dem Pufferspeicher (B) und mit dem Multiplexer (M) verbunden ist und der die Speicherplätze des Pufferspeichers (B) zyklisch wiederholt zur Einspeicherung von Informationen ansteuert und den Multiplexer (M) zur Lieferung von Informa-tionen veranlaßt, die in den den aufgerufenen Speicherplätzen entsprechenden Zeitkanälen anstehen.

5. Fernmeldevermittlungsanlage nach Anspruch 4, dadurch gekennzeichnet, daß der Vergleicher (V) an den Pufferspeicher (B) und an das Register (R) angeschlossen ist und daß ihm bei Ansteuerung eines Speicherplatzes die dort bereits enthaltene Information und die jeweils im Register (R) enthaltene Information zum Vergleich zugeführt werden.

6. Fernmeldevermittlungsanlage nach Anspruch 4 oder 5, dadurch gekennzeichnet, daß der Adressenzähler (C) an den FiFo-Speicher (F) angeschlossen ist und dorthin gegebenenfalls die Adresse des gerade angesteuerten Speicherplatzes liefert.

7. Fernmeldevermittlungsanlage nach einem der vorhergehenden Ansprüche, dadurch gekennzeichnet, daß der FiFo-Speicher (F) als Schieberegister ausgebildet ist, der die Informationen byteweise vom Eingang, an den das Register (R) und der Adressenzähler (C) angeschlossen sind, zum Ausgang schiebt, über den die Informationen byteweise zum Arbeitsspeicher (MU) und zum Umsetzer (U) weitergegeben werden.

8. Fernmeldevermittlungsanlage nach Anspruch 7, dadurch gekennzeichnet, daß der FiFo-Speicher (F) weniger Speicherplätze als der Pufferspeicher (B) hat.

9. Fernmeldevermittlungsanlage nach Anspruch 7 oder 8, dadurch gekennzeichnet, daß der Eingang des FiFo-Speichers (F) auch mit dem Vergleicher (V) verbunden ist, der zum FiFo-Speicher (F) gegebenenfalls eine zu speichernde Information über die Ungleichheit von verglichenen Informationen liefert.

**Claims**

1. Indirectly controlled telecommunications exchange system, in particular telephone exchange system which is equipped with time channel couplers and comprises a control unit (GP1) for which items of information, which originate from a plurality of other switching devices (LTU1 ... LTU8, CP, SESC, TSU, SEU), are regularly received in specific time intervals for their further processing, for which purpose the items of information are firstly stored in a buffer store (B) which possesses buffer storage locations in assignment to the switching devices (LTU1 ... LTU8, CP, SESC, TSU, SEU), and consecutive items of information which originate from the same switching device (LTU1 ... LTU8, CP, SESC, TSU, SEU) are compared with one another before, on the basis of changes of information, items of information are further processed by the control unit (GP1), characterised in that of the items of information which are present in time-interlocked time channels individually assigned to the switching devices (LTU1 ... LTU8, CP, SESC, TSU, SEU), one is received by a register (R) and supplied to a comparator (V), that in this connection, from one storage location of the buffer store (B), which is individually assigned to the relevant switching device (LTU1 ... LTU8, CP, SESC, TSU, SEU), the corresponding item of information, which has previously been stored therein, is read and is likewise fed to the comparator (V), that when these two items of information are not identical, the comparator (V) effects the storage of the item of information contained in the register (R) both into the read storage location of the buffer store (B) and also into a storage location of a FiFo-store (F), that the address of the currently used storage location of the buffer store (B) is stored in this storage location of the FiFo-store (F), that items of information and addresses contained in the FiFo-store (F) are collected by the master unit (SSP) of the control unit (GP1) in accordance with its operating rhythm for the further processing and fed to a main memory (MU) of the control unit (GP1), and that the addresses of storage locations of the buffer store (B) are converted into addresses of storage locations of the main memory (MU) with the aid of a converter.

2. Telecommunications exchange system as claimed in claim 1, characterised in that a multiplexer (M), which consecutively feeds the items of information to the register (R) in accordance with time channels, is interconnected between the switching devices (LTU1 ...

LTU8, CP, SESC, TSU, SEU) and the register (R).

3. Telecommunications exchange system as claimed in claim 2, characterised in that the register (R) serially receives the information bytewise and feeds it parallel bytewise to one respective storage location of the buffer store (B).

4. Telecommunications exchange system as claimed in claim 2 or 3, characterised in that there is provided an address counter (C) which is connected to the buffer store (B) and the multiplexer (M) and which in order to read in items of information actuates the storage locations of the buffer store (B) in a cyclically repeated fashion and causes the multiplexer (M) to supply items of information which are present in the time channels corresponding to the called-up storage locations.

5. Telecommunications exchange system as claimed in claim 4, characterised in that the comparator (V) is connected to the buffer store (B) and to the register (R) and that when a storage location is activated, the comparator is fed with the information which is contained in the storage location and with the information which is contained in the register for the comparison.

6. Telecommunications exchange system as claimed in claim 4 or 5, characterised in that the address counter (C) is connected to the FiFo-store (F) and possibly feeds the address of the currently activated storage location thereto.

7. Telecommunications system as claimed in one of the preceding claims, characterised in that the FiFo-store (F) is designed as a shift register which shifts the information bytewise from the input, to which the register (R) and the address counter (C) are connected, to the output, by means of which the information is advanced bytewise to the main memory (MU) and the converter (U).

8. Telecommunications exchange system as claimed in claim 7, characterised in that the FiFo-store (F) possesses fewer storage locations than the buffer store (B).

9. Telecommunications exchange system as claimed in claim 7 or 8, characterised in that the input of the FiFo-store (F) is connected to the comparator (V) which possibly supplies an item of information, which is to be stored, about the inequality of compared items of information to the FiFo-store (F).

**Revendications**

1. Central de télécommunication à commande indirecte et équipé de coupleurs de canaux temporels, notamment central téléphonique, qui comporte une unité de commande (GP1), pour laquelle des informations en provenance de plusieurs autres dispositifs (LTU1 ... LTU8, CP, SESC, TSU, SEU) sont reçues de façon régulière, à des intervalles de temps déterminés, pour leur traitement ultérieur, les informations étant à cet effet tout d'abord mémorisées dans une mémoire tampon (B) comportant des emplacements de mémorisation intermédiaire associés aux dispositifs de commutation (LTU1 ... LTU8, CP, SESC, TSU, SEU), et des informations successives, qui proviennent du même dispositif de commutation (LTU1 ... LTU8, CP, SESC, TSU, SEU), sont comparées entre elles, avant que des informations soient traitées ultérieurement par l'unité de commande (GP1), en raison de modifications d'informations, caractérisé par le fait que parmi les informations apparaissant dans les canaux temporels imbriqués dans le temps et associées individuellement aux dispositifs de commutation (LTU1 ... LTU8, CP, SESC, TSU, SEU), une est respectivement reçue par un registre (R) et est ensuite appliquée à un comparateur (V), qu'en même temps, à partir d'un emplacement de mémorisation de la mémoire tampon (B), qui est associée individuellement au dispositif de commutation (LTU1 ... LTU8, CP, SESC, TSU, SEU) respectivement concerné, l'information correspondante mémorisée là antérieurement est lue et est également appliquée au comparateur (V), que lorsque ces deux informations ne sont pas identiques les comparateurs (V) commandent la mémorisation de l'information contenue dans le registre (R) aussi bien dans l'emplacement de mémorisation de la mémoire tampon (B) qui vient d'être lue qu'également dans un emplacement de mémorisation d'une mémoire FiFo (F), qu'à cet emplacement de mémorisation de la mémoire FiFo (F) est également mémorisée l'adresse de l'emplacement de mémorisation de la mémoire tampon (B) qui est justement utilisée, que des informations contenues dans la mémoire FiFo (F), accompagnées d'adresses, sont extraites par le contrôleur (SSP) de l'unité de commande (GP1), en correspondance avec son rythme de travail, pour le traitement ultérieur, et sont introduites dans une mémoire de travail (MU) de l'unité de commande (GP1), et qu'en même temps les adresses d'emplacements de mémorisation de la mémoire tampon (B) sont converties, à l'aide d'un convertisseur (U), en adresses d'emplacements de mémorisation de la mémoire de travail (MU) qui doivent être utilisées lors de cette introduction.

2. Central de télécommunication suivant la revendication 1, caractérisé par le fait qu'entre les dispositifs de commutation (LTU1 ... LTU8, CP, SESC, TSU, SEU) et le registre (R), est inséré un multiplexeur (M) qui délivre les informations au registre (R) les unes à la suite des autres en correspondance avec les canaux temporels.

3. Central de télécommunication suivant la revendication 2, caractérisé par le fait que le registre (R) reçoit les informations en série, multiplet par multiplet, et les délivre en parallèle, multiplet par multiplet, à un emplacement de mémorisation respectif de la mémoire tampon (B).

4. Central de télécommunication suivant la revendication 2 ou 3, caractérisé par le fait qu'il est prévu un compteur d'adresses (C), qui est relié à la mémoire tampon (B), et au multiplexeur (M), et qui commande les emplacements de mémorisation de la mémoire tampon (B) cycliquement, de façon répétée, pour la mémorisation d'informations, et commande le multiplexeur (M) pour la délivrance d'informations qui existent dans les canaux temporels qui correspondent aux emplacements de mémoire appelés.

5. Central de télécommunication suivant la revendication 4, caractérisé par le fait que le comparateur (V) est relié à la mémoire tampon (B) et au registre (R), et que lors de la commande d'un emplacement de mémorisation, ce comparateur reçoit l'information qui y est déjà contenue et l'information respectivement contenue dans le registre (R), pour les comparer.

6. Central de télécommunication selon la revendication 4 ou 5, caractérisé par le fait que le compteur d'adresses (C) est relié à la mémoire FiFo (F) et lui délivre éventuellement l'adresse de l'emplacement de mémorisation qui est justement commandée.

7. Central de télécommunication suivant l'une des revendications précédentes, caractérisé par le fait que la mémoire FiFo (F) se présente sous la forme d'un registre à décalage, qui décale les informations, multiplet par multiplet, de l'entrée à laquelle sont raccordés le registre (R) et le compteur d'adresses (C), vers la sortie par l'intermédiaire de laquelle les informations sont délivrés, multiplet par multiplet, à la mémoire de travail (MU) et au convertisseur (U).

8. Central de télécommunication selon la revendication 7, caractérisé par le fait que la mémoire FiFo (F) comporte moins d'emplacements de mémorisation que la mémoire tampon (B).

9. Central de télécommunication suivant la revendication 7 ou 8, caractérisé par le fait que l'entrée de la mémoire FiFo (F) est également reliée au comparateur (V), qui délivre éventuellement à la mémoire FiFo (F) une information, devant être mémorisée, concernant l'inégalité d'informations comparées.

# FIG 1

# FIG 2